Europäisches Patentamt

European Patent Office

Office européen des brevets

(19)

(11) Veröffentlichungsnummer: **0 141 916**
**B1**

(12) **EUROPÄISCHE PATENTSCHRIFT**

(45) Veröffentlichungstag der Patentschrift: **09.05.90**

(51) Int. Cl.⁵: **H 04 L 7/06, H 04 L 25/49**

(21) Anmeldenummer: **84109203.4**

(22) Anmeldetag: **03.08.84**

(54) **Verfahren zum Einfügen eines Synchronmusters.**

(30) Priorität: **30.08.83 DE 3331205**

(43) Veröffentlichungstag der Anmeldung:
**22.05.85 Patentblatt 85/21**

(45) Bekanntmachung des Hinweises auf die
Patenterteilung:
**09.05.90 Patentblatt 90/19**

(84) Benannte Vertragsstaaten:
**AT BE CH DE FR GB IT LI LU NL SE**

(56) Entgegenhaltungen:
EP-A-0 081 750
US-A-3 898 388
US-A-4 063 291

PATENTS ABSTRACTS OF JAPAN, Band 3, Nr.
82 (E-123), 14. Juli 1979, Seite 66 E 123; &
JP-A-54 60 814 (NIPPON DENSHIN DENWA
KOSHA) 16-05-1979

(73) Patentinhaber: **TELEFUNKEN Fernseh und
Rundfunk GmbH
Göttinger Chaussee 76
D-3000 Hannover 91 (DE)**

(72) Erfinder: **Scholz, Werner, Dipl.-Ing.
Osterstrasse 20
D-3007 Gehrden (DE)**

(74) Vertreter: **Einsel, Robert, Dipl.-Ing.
TELEFUNKEN Fernseh und Rundfunk GmbH
Göttinger Chaussee 76
D-3000 Hannover 91 (DE)**

EP 0 141 916 B1

**Beschreibung**

Die Erfindung betrifft ein Verfahren zum Einfügen eines Synchronmusters in ein im Biphase-Code übertragenes PCM-Signal gemäß dem Oberbegriff des Patentanspruchs 1.

Auf dem 12. Treffen der 8 mm Video Konferenz, Audio Arbeitsgruppe vom 28.03.1983 in Tokyo, Japan wurde ein Synchronmusters für ein Biphase-Signal vorgeschlagen, das aus zwei zueinander invertierten Bit mit je einer Länge von 1,5 Taktperioden besteht.

Bei einem Biphase-Signal ist definitionsgemäß das maximale Verhältnis der Pegelübergangsabstände mit 2:1 festgelegt. Die Erhöhung dieses Verhältnisses auf 3:1 beeinflußt erheblich das Biphase-Spektrum. Um diesen Nachteil auszugleichen, sind andere Entzerrungsschaltungen sowie ein breiterer Übertragungskanal erforderlich.

Der Erfindung liegt die Aufgabe zugrunde, bei einem Verfahren zum Einfügen eines Synchronmusters in ein im Biphase-Code übertragenes PCM-Signal ein solches Synchronmuster zu entwickeln, das einen geringen Einfluß auf das Bipahse-Spektrum hat.

Die Aufgabe wird durch die im Patentanspruch 1 angegebenen Merkmale gelöst.

Vorteilhafte Weiterbildungen der Erfindung sind in den Unteransprüchen beschrieben.

Erfindungsgemäß beträgt der Abstand der Pegelübergänge im Bereich des Synchronmusters wie beim Biphase-Signal 0,5 bzw. 1,O Bitperioden. Dabei befindet sich zu beiden Seiten einer geraden Anzahl von langen Halbwellen je eine ungerade Anzahl von aufeinanderfolgenden kurzen Halbwellen. Die Abweichung vom Biphase-Signal besteht lediglich darin, daß die Anzahl der kurzen aufeinanderfolgenden Halbwellen ungerade ist. Bei einem ungestörten Biphase-Signal muß sie stets gerade sein.

Zum besseren Verständnis der Erfindung werden nachstehend einige Ausführungsbeispiele anhand von Zeichnungen näher erläutert.

Es zeigen:

Fig. 1 ein Synchronmuster bei einem Biphase-Level-Signal,

Fig. 2 ein Synchronmuster bei einem Biphase-Mark-bzw. Biphase-Space-Signal,

Fig. 3 eine Schaltung zur Gewinnung eines Blocksynchronsignals,

Fig. 4 ein Impulsdiagramm zur Fig. 3.

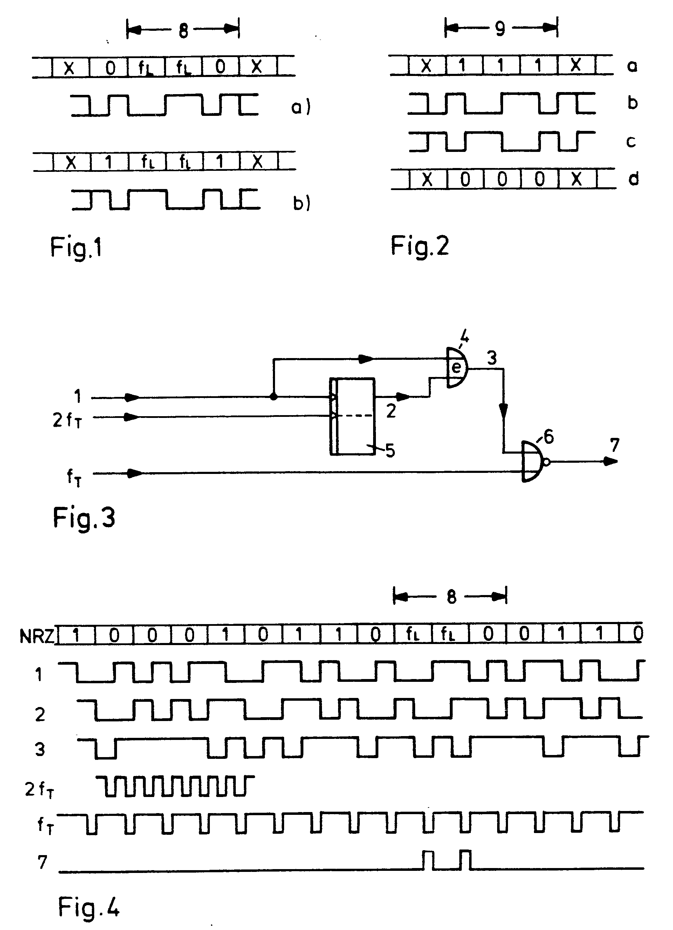

Fig. 1 zeigt ein Synchronmuster 8 für ein Biphase-Level-Signal. In Zeile a geht dem Synchronmuster 8 ein Bit mit dem Wert 0 voran, in Zeile b ein Bit mit dem Wert 1. Das Synchronmuster 8 ist um einen halben Bittakt verschoben. Ein Pegelübergang in der Mitte einer Bitzelle, also während eines Bittaktes, ist dadurch nicht mehr vorhanden. Eine für ein Biphase-Level-Signal ausgelegte Dekoderschaltung erkennt diese Bitsequenz als Nicht-Biphase-Level-Signal. Das Synchronmuster 8 besteht bei dem in Fig. 1 gezeigten Beispiel aus 3 Bit. Die ersten beiden Bit $f_L f_L$ sind zueinander invertiert und haben eine Länge von je einem Bittakt. Das dritte Bit des Synchronmusters 8 ist identisch mit dem Bit, das dem Synchronmuster 8 vorangeht. Durch Vorsetzen einer Null bzw. einer Eins vor das Synchronmuster kann jeweils der gleiche Schwingungszug (1a oder 1b) als Synchronmuster erzeugt werden. Das Synchronmuster würde dann im Falle von Fig. 1 aus 4 Bit bestehen.

Fig. 2 zeigt ein Synchronmuster 9 für ein Biphase-Mark-bzw. Biphase-Space-Signal. Das dem Synchronmuster 9 vorangehende Bit ist hier nicht entscheidend für den Verlauf des Synchronmusters, sondern die Richtung des Pegelüberganges zwischen dem letzten Datenbit x und dem ersten Bit des Synchronmusters 9. Je nach Richtung dieses Pegelüberganges entsteht das in Zeile b oder c angegebene Muster. Durch ein zusätzliches Bit vor dem eigentlichen Synchronmuster kann auch hier ein bestimmter Verlauf des Synchronmusters herbeigeführt werden. Dieses zusätzliche Bit ist jeweils so zu wählen, daß der für den Synchronmusterverlauf maßgebliche Pegelübergang die gewünschte Richtung erhält. Bei Demodulation von Zeile b bzw. c nach Biphase-Mark würde das in Zeile a dargestellte Bitmuster entstehen, bei Demodulation nach Biphase-Space das in Zeile d dargestellte Bitmuster.

Fig. 3 zeigt eine Schaltung zur Gewinnung eines Blocksynchronsignals. An einem Eingang 1 liegt ein beliebiges Biphase-Signal, im folgenden Biphase 1 genannt, an. Der Eingang 1 führt auf einen Eingang eines Exklusiv-ODER-Gatters 4. Das D-Flip-Flop 5 wird mit der doppelten Taktfrequenz $f_T$ getaktet. Am Ausgang 2 des D-Flip-Flops 5 führt ein gegenüber dem Biphase-1-Signal um eine halbe Bitperiode verschobenes Biphase-2-Signal auf einen Eingang des Exklusiv-ODER-Gatters 4. Der Ausgang 3 des Exklusiv-ODER-Gatters 4 ist mit einem Eingang eines NOR-Gatters 6 verbunden. Auf einen weiteren Eingang des NOR-Gatters 6 führt der Bittakt $f_T$. Am Ausgang 7 des NOR-Gatters 6 ist ein Blocksynchron-Signal abgreifbar.

Fig. 4 zeigt ein Impulsdiagramm zu Fig. 3. In der ersten Zeile ist das NRZ-Signal für das Biphase-1-Signal angegeben, für den Fall, daß es sich bei dem Biphase-1-Signal um ein Biphase-Level-Signal handelt (Fig. 1a). Das Synchronmuster 8 besteht aus drei Bit $f_L$, $f_L$ und 0. Die Bezeichnungen der Signalverläufe entsprechen denen aus Fig. 3. Dabei ist 1 das Biphase-1-Signal, 2 das Biphase-2-Signal, 3 das Ausgangssignal des Exklusiv-ODER-Gatters 4 und 7 das gewonnene Synchron-Signal. Aus Zeile 7 ist zu erkennen, daß nur im Abschnitt des Synchronmusters 8 ein Ausgangssignal existiert.

Grundsätzlich besitzt jedes Biphase-Signal zwei Folgen von Pegelübergängen, die im Abstand einer Bitperiode auftreten: Die erste Folge ist vollständig, die zweite Folge ist lückenhaft. Bei Biphase-Level enthält die vollständige Folge die Information, die lückenhafte Folge entsteht nach Bedarf. Bei Biphase-Mark oder -Space enthält die lückenhafte Folge die Information. Die Richtung der Pegelübergänge in der vollständigen Folge ergibt sich nach Bedarf.

Ein um eine halbe Bitperiode verschobenes Biphase-Signal, das lange Halbwellen enthält, erzeugt in der vollständigen Pegelübergangsfolge soviele Lücken wie lange Halbwellen vorhanden sind. Mit einer Schaltung gemäß Fig. 3 können diese Lücken und damit die Lage des Synchronsignals erkannt werden. Die Mindestlänge für das Synchronsignal beträgt 2 Bit: ein Bit zur Erzeugung einer Lücke und ein Bit zur Einfügung in das gegebene Signal, so daß keine Halbwellen von unzulässiger Dauer entstehen. Wenn das Synchronsignal stets den gleichen Verlauf haben soll, dann sind zwei Bit zur Einfügung erforderlich.

Da Synchronsignale durch Störungen vorgetäuscht werden können, kann die Verwendung längerer Synchronsignale zweckmäßig sein, die dann mehrere Lücken in der vollständigen Folge der Pegelübergänge erzeugen. Die Ausführungsbeispiele enthalten jeweils zwei lange Halbwellen im Synchronsignal und erzeugen jeweils zwei Lücken in der vollständigen Pegelübergangsfolge.

## Patentansprüche

1. Verfahren um Einfügen eines Synchronmusters in ein im Biphase-Code übertragenes PCM-Signal mit einer vollständigen und einer lückenhaften Folge von Pegelübergängen, dadurch gekennzeichnet, daß das Synchronmuster (8, 9) aus einem gegenüber dem PCM-Signal um eine halbe Bitperiode verschobenen Biphase-Signal besteht wobei sich zu beiden Seiten einer geraden Anzahl von langen Halbwellen je eine ungerade Anzahl von aufeinanderfolgenden kurzen Halbwellen befindet.

2. Verfahren nach Anspruch 1, dadurch gekennzeichnet, daß das Synchronmuster (8) in der vollständigen Pegelübergangsfolge des Biphase-Signals eine oder mehrere Lücken erzeugt, ohne daß im Gesamtsignal Pegelübergangsabstände auftreten, die von einer halben oder einer Bitperiode abweichen.

3. Verfahren nach Anspruch 1, dadurch gekennzeichnet, daß das Synchronmuster (8, 9) mindestens aus 2 Bit besteht.

4. Verfahren nach Anspruch 1, dadurch gekennzeichnet, daß das Synchronmuster (8, 9) aus mindestens 3 Bit besteht und stets den gleichen Signalverlauf besitzt.

5. Verfahren nach Anspruch 1, dadurch gekennzeichnet, daß das Synchronmuster (8) für ein Biphase-Level-Signal aus drei Bit besteht.

6. Verfahren nach Anspruch 2, dadurch gekennzeichnet, daß das letzte Bit des Synchronmusters (8) mit dem dem Synchronmuster (8) vorangehenden Bit übereinstimmt.

## Revendications

1. Procédé d'insertion d'une configuration synchrone dans un signal MIC transmis en code biphase, comprenant une séquence complète et une séquence incomplète de transitions de niveau, caractérisé en ce que la configuration synchrone (8, 9) est constituée par un signal biphase décalé d'une demi-période de bit par rapport au signal MIC et comportant un nombre impair de demi-ondes courtes successives de part et d'autre d'un nombre pair de demi-ondes longues.

2. Procédé selon la revendication 1, caractérisé en ce que la configuration synchrone (8) crée un ou plusieurs blancs dans la séquence complète de transitions de niveau du signal biphase sans qu'il y ait dans l'ensemble du signal des intervalles de transition de niveau autres que d'une demie ou d'une période de bit.

3. Procédé selon la revendication 1, caractérisé en ce que la configuration synchrone (8, 9) comprend au moins deux bits.

4. Procédé selon la revendication 1, caractérisé en ce que la configuration synchrone (8, 9) comprend au moins trois bits et qu'elle possède toujours la même allure de signal.

5. Procédé selon la revendication 1, caractérisé en ce que la configuration synchrone (8) pour un signal de niveau biphase comprend trois bits.

6. Procédé selon la revendication 2, caractérisé en ce que la configuration synchrone (8) concorde avec le bit qui précède la configuration synchrone (8).

## Claims

1. A method for the insertion of a synchronisation pattern in a PCM-signal transmitted in biphase-code with a complete and an incomplete sequence of level transitions, characterised in that the synchronisation pattern (8, 9) consists of a biphase-signal shifted relative to the PCM-signal by half a bit period, whereby at both sides of an even number of long half waves there is in each case located an odd number of successive short half waves.

2. A method according to claim 1, characterised in that the synchronisation pattern (8) produces in the complete level transition sequence of the biphase-signal one or more gaps, without there occurring in the complete signal level transition spacings which deviate from a half or one bit period.

3. A method according to claim 1, characterised in that the synchronisation pattern (8, 9) comprises at least 2 bits.

4. A method according to claim 1, characterised in that the synchronisation pattern (8, 9) comprises at least 3 bits and always has the same signal course.

5. A method according to claim 1, characterised in that the synchronisation pattern (8) for a biphase-level-signal comprises three bits.

6. A method according to claim 2 characterised in that the last bit of the synchronisation pattern (8) conforms with the bit preceding the synchronisation pattern (8).

Fig.1

Fig.2

Fig.3

Fig.4